Europäisches Patentamt

European Patent Office

Office européen des brevets

(19)

(11) Veröffentlichungsnummer: **0 199 320**
**B1**

(12) # EUROPÄISCHE PATENTSCHRIFT

(45) Veröffentlichungstag der Patentschrift:
13.01.88

(21) Anmeldenummer: 86105460.9

(22) Anmeldetag: 19.04.86

(51) Int. Cl.⁴: **F 28 D 7/06,** F 28 F 9/00,
F 16 J 15/32, F 16 J 15/44

(54) **Wärmetauscher.**

(30) Priorität: 20.04.85 DE 3514377

(43) Veröffentlichungstag der Anmeldung:
29.10.86 Patentblatt 86/44

(45) Bekanntmachung des Hinweises auf die Patenterteilung:
13.01.88 Patentblatt 88/2

(84) Benannte Vertragsstaaten:
BE CH DE FR GB IT LI NL SE

(56) Entgegenhaltungen:
DE-A-1 958 507
DE-A-2 000 886
DE-A-2 344 666
DE-A-3 023 609
DE-A-3 146 089
DE-B-1 035 429
DE-B-1 085 858
DE-C-951 122
DE-C-954 159
US-A-3 406 747
US-A-3 805 881
US-A-4 475 586
US-E-30 206

(73) Patentinhaber: MTU MOTOREN- UND TURBINEN-
UNION MÜNCHEN GMBH, Dachauer Strasse 665
Postfach 50 06 40, D-8000 München 50 (DE)

(72) Erfinder: Wöhrl, Bernhard, Dr., Planegger Strasse
21, D-8035 Gauting (DE)
Erfinder: Jabs, Alfred, Tölzer Strasse 21, D-8038
Gröbenzell (DE)

## Beschreibung

Aus der US-A 4, 475, 586 ist ein Wärmetauscher mit einem separate Druckluftführungen enthaltenden Zentralrohr bekannt, von dem eine im wesentlichen U-förmige Wärmetauscherrohrmatrix jeweils beidseitig gegen eine Heißgasströmung auskragt und in Kreuz-Gegenstrom-Bauweise ausgeführt ist.

Bei einem derartigen Wärmetauscher ist es erforderlich, eine Berandungsleitwand, insbesondere im Bereich der Umlenkung der zu U-förmigen Rohrbügeln geformten Matrix anzuordnen. Da eine solche Berandungsleitwand konstruktionsbedingt Bestandteil einer anderen, die Wärmetauschermatrix ummantelnden Gehäusebaueinheit ist, deren Temperatur- und Dehnungsverläufe sich von denen der Wärmetauscherrohrmatrix unterscheiden, erfordert eine derartige Anordnung, um das Prinzip der freien Verschieblichkeit der randständigen Rohrbügel der Matrix nicht zu gefährden, einen dementsprechenden Abstand zwischen der Berandungsleitwand und der randständigen Rohrbügelreihe der Matrix. Für das eine Arbeismedium, also das Heißgas, bewirkt ein solcher Abstand einen verhältnismäßig großen Teilleckfluß. Daraus ergeben sich zwei wesentliche, die Effektivität des Wärmetauschers beeinträchtigende Nachteile:

Es ist dies erstens die Tatsache, daß diese Heißgasleckmenge nicht am Wärmetauschprozeß teilnimmt, und zweitens, daß sie am Austritt aus dem Spalt mit verhältnismäßig großer Strömungsgeschwindigkeit in das natürliche Heißgasabströmgebiet stromab der Profilrohrmatrix "schießt", wodurch Mischturbulenzen in diesem Abströmgebiet, und damit also verhältnismäßig starke Strömungsungleichförmigkeiten entstehen, die zusammen mit dem ersten Nachteilsfaktor zu einer verhältnismäßig starken Verringerung des Wärmeaustauschgrades führen.

Ein weiterer wesentlicher Nachteil bei einem derartigen Wärmetauscher ist es, daß den zugeführten Heißgasen über einen wesentlichen Teil des bogenförmigen Matrixumlenkbereiches eine im wesentlichen bogenförmige Auslenkung der Strömung zuteil wird, wodurch die Heißgasströmung in diesem Matrixgebiet wesentlich geringere Druck- und Geschwindigkeitsverluste erfährt als derjenige Teil der Heißgasströmung, der die geraden Matrixrohrbügelpartien quer bzw. im wesentlichen unter einem rechten Winkel umströmt; von außen nach innen gesehen, kann somit ein nicht unbeachtlicher Abschnitt des bogenförmigen Matrixumlenkbereiches bzw. der zu Verfügung stehenden Matrixfläche nur unzureichend in den Wärmetauschprozeß mit einbezogen werden; insbesondere im äußeren Umlenkbereich der Matrix ist kein Kreuz-Gegenstrom-Effekt bereitstellbar.

Ferner ist aus der US-A 3, 746, 083 ein Kreuzgegenstrom-Wärmetauscher mit einer seitlich von einem getrennte Druckluftführung enthaltenen Sammelrohr gegen die Heißgasströmung auskragenden U-förmigen Matrix bekannt. Zwecks Wärmedehnungs- und -spannungskompensation sind im vorliegenden bekannten Fall zwar schon u. a. elastische Dichtleisten zwischen Sammelrohr und Heißgasgehäuse auf der einen Seite sowie zwischen letzterem (Berandung) und dem benachbarten Matrixumlenkbereich angeordnet. Jedoch soll hierbei eine die Matrix haltende und entlang Schienen des Gehäuses beweglich geführte Lochplatte zugleich eine Heißgasschottwand gegenüber dem gesamten bogenförmigen Matrixumlenkbereich ausbilden; mithin wird im bekannten Fall der gesamte bogenförmige Matrixumlenkbereich (auch "Luftumlenkkammer" bezeichnet) vom Wärmetauschprozeß ausgeschlossen; mit anderen Worten bleibt dabei zu Gunsten dehnungskompensatorischer Vorkehrungen ein nicht unbeachtlicher Teil des zur Verfügung stehenden Matrixvolumens für den Wärmetauschprozeß völlig ungenutzt.

Bei einem aus der DE-A 2 000 886 bekannten und der Gattung (Oberbegriff) des Patentanspruchs 1 zugrunde gelegten Wärmetauscher soll die im wesentlichen aus U-förmigen Matrixrohrbügeln bestehende Kreuz-Gegenstrom-Matrix einerseits mit zwei voneinander getrennten Druckluftführungen kommunizieren und andererseits einen bogenförmigen Umlenkbereich aufweisen; der Umlenkbereich ist dabei außen von einer Berandungsleitwand des Heißgasgehäuses mit Abstand umgeben; ferner soll im bekannten Fall eine zwischen Matrix eine Berandungsleitwand angeordnete Schale den äußeren Umlenkbereich zumindest teilweise heißgasseitig abdecken; weiterhin ist die Schale mit den daran angrenzenden Profilrohr bögen der Matrix fest verbunden, z. B. verlötet, so daß sich die federlaschenartig oder über eine verformbare Profilleiste am Gehäuse verankerte Schale einschließlich der Matrixrohrbügel in die gekrümmte Berandungsleitwand hineindehnen können.

Im bekannten Fall ist also weder eine individuelle freie Dehnbarkeit bzw. relative Beweglichkeit der äußeren Rohrbügel untereinander noch zwischen der Schale einerseits und dem daran angrenzenden Rohrbügelpaket gewährleistet. Als Folge dieser angegebenen Schalenabdeckung des bogenseitigen Matrixrandes wird der Heißgasströmung - speziell im äußeren Matrixbogenbereich - ein demgemäß bogenförmiger Strömungsverlauf aufgeprägt; es sind auch hier die eingangs schon behandelten Druck- und Geschwindigkeitsdifferenzen der Heißgasströmung zwischen bogenförmigen und geradlinigem Matrixprofilfeld zu erwarten, die den Wärmetauschprozeß beeinträchtigen.

Der Erfindung liegt die Aufgabe zugrunde, einen Wärmetauscher nach der Gattung (Oberbegriff) des Anspruchs 1 anzugeben, bei dem die Heißgasrandströmung zwischen Schale und benachbarten Rohrbögen unter gleichzeitiger Optimierung des Wärmetauschprozesses im insbesondere äußeren Umlenkbereich derart absperrbar ist, daß betriebsbedingte Relativbewegungen der Rohrbügel untereinander sowie zwischen Rohrbügeln und Schale auf der einen Seite und zwischen der letzteren und der Berandungsleitwand auf der anderen Seite beherrschbar sind.

Die gestellte Aufgabe ist mit den Merkmalen des Kennzeichnungsteils des Patentanspruchs 1 erfindungsgemäß gelöst.

Hierdurch können die als Ursache von unterschiedlichen Temperaturen, Schwingungen oder elastischen Auslenkungen verursachten Relativbewegungen der einzelnen Matrix-Rohrbügel einwandfrei beherrscht werden; der hierfür vorgegebene Zwischenraum zwischen der Schale und den randständigen Rohrbögen kann gegenüber der Heißgasströmung konsequent so abgesperrt werden, daß insbesondere der äußere randständige Matrixumlenkbereich für den Wärmetauschprozeß wesentlich besser nutzbar ist. Die abschnittsförmige Aufteilung des Zwischenraumes ermöglicht eine etwa "zickzack-förmige" Profilrohrumströmung im äußeren Bogenrandbereich.

Im Wege der erfindungsgemäßen Schalenordnung und -ausbildung kann ein wesentlicher Teil des bogenförmigen Matrixumlenkbereiches abgedeckt werden, so daß die Heißgase primär den im wesentlichen geraden Matrixbereich umströmen. Der verbleibende, in die Schale abströmende Heißgasanteil kann insbesondere im äußeren randständigen Bogenbereich der Matrix einem Kreuz-Gegenstrom-Wärmetausch-Prozeß zugänglich gemacht werden, so daß sich gegenüber Bekanntem ein höherer Wärmeaustauschgrad erzielen läßt.

Vorteilhafte Ausgestaltungen des Erfindungsgegenstandes ergeben sich aus den Merkmalen der Patentansprüche 2 bis 10.

Anhand der Zeichnungen ist die Erfindung beispielsweise weiter erläutert; es zeigen:

Fig. 1 eine schematische Profilwärmetauscherstirnansicht unter Zuordnung längs geschnittener Gehäuse- und Schalenpartien,

Fig. 2 eine längs geschnittene Schalenpartie unter Zuordnung einer Bürstendichtung zwischen Schale und benachbarter Rohrbügelsektion der Matrix,

Fig. 3 einen Schnitt gemäß B-B der Fig. 2,

Fig. 4 eine längs geschnittene Schalenpartie unter Zuordnung einer abweichend von Fig. 2 im wesentlichen senkrecht gegen die Profilachse einer randständigen Rohrbügelsektion angestellten Bürstendichtung,

Fig. 5 einen Schnitt gemäß C-C der Fig. 4,

Fig. 6 eine schematische Profilwärmetauscherstirnansicht unter Zuordnung längs geschnittener Gehäuse- und Schalenpartien, worin insbesonere Details der bewegungskompensatorischen Absperrdichtungen zwischen Gehäuse und Schale gegenüber Fig. 1 besser verdeutlicht sind,

Fig. 7 eine perspektivische Darstellung einer als Differenzdruckdichtung ausgebildeten Heißgasabsperrdichtung zwischen einer geradwandigen Gehäuse- und einer ebenfalls geradwandigen Schalensektion,

Fig. 8 eine Darstellung von funktionellen Einzelheiten der Differenzdruckdichtung aus Fig. 7,

Fig. 9 eine perspektivische Darstellung einer als Bürstendichtung ausgebildeten Heißgasabsperrdichtung zwischen einer geradwandigen Gehäuse- und einer ebenfalls geradwandigen Schalensektion und

Fig. 10 eine Darstellung von funktionellen Einzelheiten der Bürstendichtung aus Fig. 9.

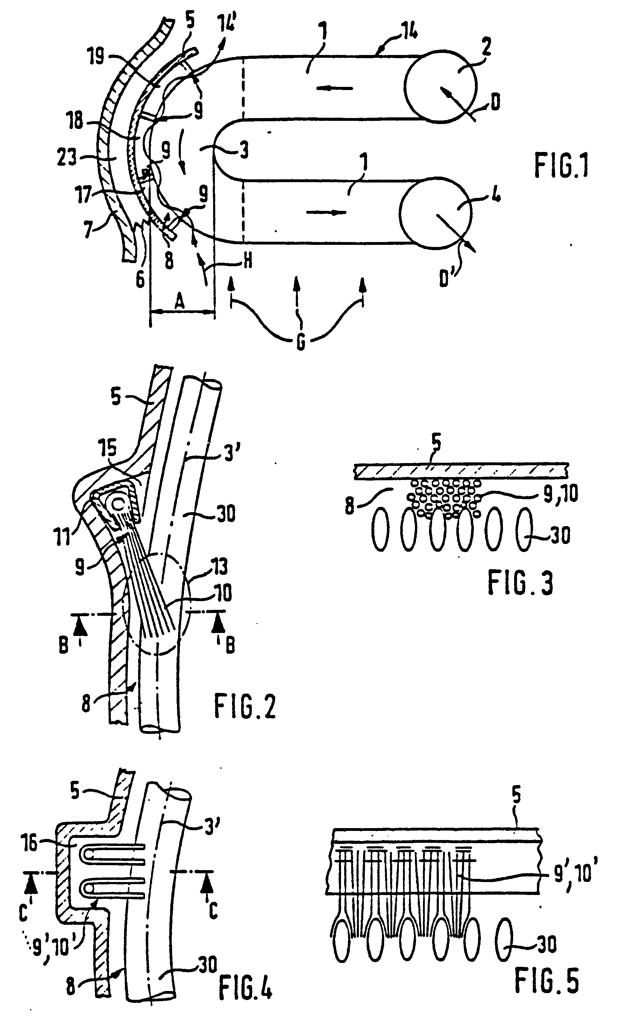

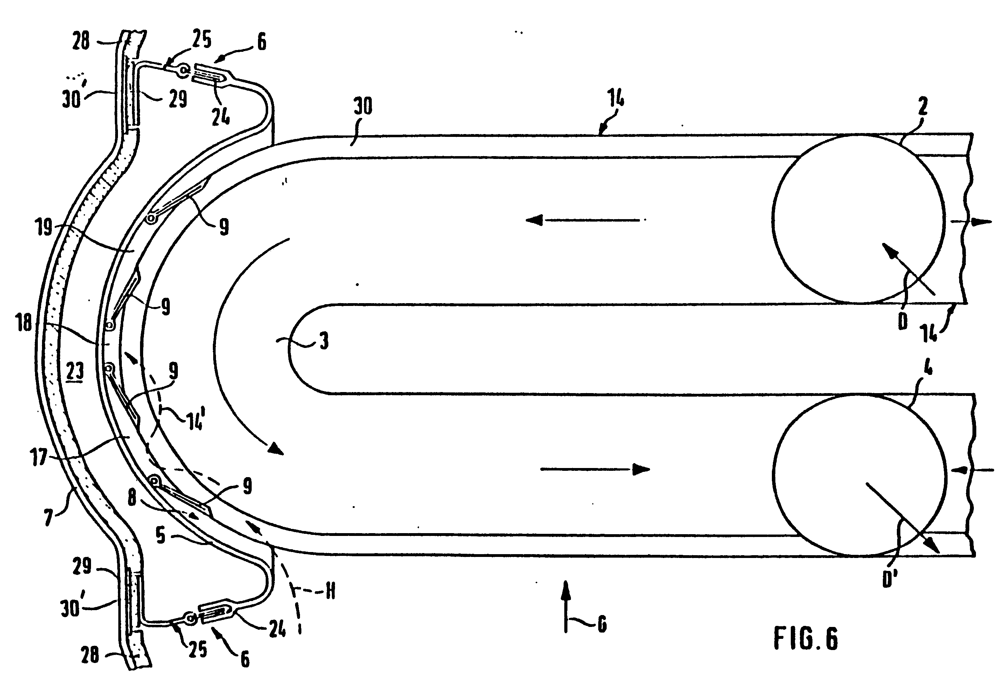

Fig. 1 und 6 zeigen einen Profilrohr-Wärmetauscher mit rohrbündelartiger Kreuz-Gegenstrom-Matrix 14, die von Heißgas H (Fig. 1 und 6) umströmbar ist und ferner ein- und austrittsseitig mit getrennte Druckluftführungen 2, 4 ausbildenden Sammelrohren kommuniziert, wobei die Matrix 14 aus im wesentlichen U-förmigen Matrixrohrbügeln, z. B. 30 (Fig. 6), zusammengesetzt ist und ferner gerade Rohrbündel 1 sowie einen bogenförmigen Umlenkbereich 3 aufweist; der bogenförmige Umlenkungsbereich 3 ist außen von einer Berandungsleitwand 7 eines Gehäuses für die Heißgasführung umgeben.

Gemäß Pfeil D wird bei diesem Wärmetauscher die vorzuwärmende bzw. aufzuheizende Druckluft der oberen Druckluftführung 2 zugeführt, durchströmt dann in der angegebenen Pfeilfolge die Matrix 14, über welche sie als Folge der Heißgasumströmung H aufgeheizt wird, um dann gemäß Pfeil D über die untere Druckluftführung 4 einem geeigneten Verbraucher, z. B. der Brennkammer eines Gasturbinentriebwerkes, zugeführt werden zu können. Beim Heißgasstrom G kann es hierbei um den Abgasstrom des betreffenden Gasturbinentriebwerkes handeln. Im Wege dieses Wärmetauschprozesses kann somit ein Teil der in den Abgasen des Triebwerkes enthaltenen Wärme zurückgewonnen, d. h., für den Arbeitsprozeß des Triebwerks nutzbar gemacht werden.

Der Wärmetauscher wird im Bereich der geraden Rohrbündel 1 von der Heißgasströmung G senkrecht zur Rohrachse beaufschlagt (Kreuzgegenstrom).

Im allgemeinen sind nun bei derartigen Wärmetauscherkonzepten in dieser Zone (gerade Rohrbündel 1) die Strömungsverluste für das Heißgas sehr hoch, hingegen im bogenförmigen Umlenkbereich 3, in dem die Heißgasströmung zumindest teilweise in Rohrrichtung verläuft, geringer.

Um u. a. die geraden Rohrbündel 1 der Matrix 14 optimal vom Heißgas H umströmen lassen zu können, soll zwischen der Matrix 14 und der Berandungsleitwand 7 eine Schale 5 vorgesehen sein, die den bogenförmigen Matrixumlenkbereich 3 zumindest teilweise gegenüber der Heißgasströmung G abdeckt; in Verbindung mit Fig. 1 deckt die Schale 5 den bogenförmigen Umlenkbereich 3 der Matrix um etwa 30 % bis 70 % der Fläche A ab.

Im Fall eines nicht abgesperrten oder abgedichteten Zwischenraums 8 - zwischen der Schale 5 und den benachbarten Rohrbügeln der Matrix 14 - würde normalerweise ein Heißgasteilstrom H den Weg des geringsten Widerstandes durch den bogenförmigen Umlenkbereich 3 der Matrix, besonders durch den "freien" Zwischenraum 8 suchen, der wiederum erforderlich wäre, um eine gegenüber der Schale 5 unbehinderten freie Beweglichkeit der angrenzenden Rohrbügel zu gewährleisten.

Lösungsgemäß sind, gegebenenfalls in aufeinanderfolgenden Reihen, Bürstendichtungen 9 (Fig. 1 und 6) vorgesehen, die den zwischen der Schale 5 und benachbarten Rohrbügeln 30 (Fig. 6) des bogenförmigen Umlenkbereiches 3 der Matrix 14 angeordneten Zwischenraum 8 absperren und in rohrbogenseitig offene Abschnitte 17, 18, 19 aufteilen; dabei sind die Bürstendichtungen 9 auf der einen Seite an der Schale 5 befestigt und auf der anderen Seite lose und bewegungskompensatorisch gegen die Rohrbügel 30 geführt.

Unter Gewährleistung einer optimalen Abdichtung, kann so dem abgespaltenen Heißgasteilstrom H, 14' ein wellen- oder zickzack-förmiger Strömungsverlauf entlang der im äußeren Bogenbereich liegenden Rohrbügel 30 (Fig. 6) aufgeprägt und so der Wärmetauschprozeß - im Sinne eines Kreuz-Gegenstrom-Prozesses - in diesem Bereich optimiert werden.

Der Erfindung liegt unter anderem der Gedanke zugrunde, daß eine Bürstendichtung 9, z. B. aus hochwarmfestem Draht, nahezu tagential oder unter einem Winkel zur Rohrachse 3' die angrenzenden Rohrbügel 30 umschließt (Fig. 2 und 3) und so, unterstützt durch das Aufspreizen der Borsten 10, bei einseitiger Fassung 11, den Zwischenraum 8, zwischen den gebogenen Rohrbügeln 30 (Fig. 6) und der Schale 5 sowie Zwischenräume zwischen den benachbarten Röhrchen (Fig. 3) ausfüllt.

Der Vorteil der Bürstendichtungen ist ferner der, daß die Borsten 10 genügend nachgiebige Länge zwischen der festen Fassung 11 und der tangentialen Berührungszone 13 (Fig. 2) der Röhrchen 30 aufweisen, um Relativdehnungen und Auslenkungen der Röhrchenmatrix 14 infolge Schwingungen ausgleichen zu können. Diese Anordnung verspricht ein Minimum an freier Durchschnittsfläche für die Heißgasströmung.

Wie insbesondere aus Fig. 3 und 5 ersichtlich, sollen also die betreffenden freien Enden (Borsten 10, 10') der Bürstendichtung 9 bzw. 9' in die in Nachbarschaft der Schale 5 zwischen den Profilenden der Rohrbügel 30 belassenen Zwischenräume eingreifen.

Ferner kann die betreffende Bürstendichtung 9 bzw. 9' schräg (Fig. 2) oder in wesentlichen senkrecht zur jeweiligen Profilrohrachse 3 der randständigen Rohrbügel 30 der Matrix 14 angestellt sein (Fig. 4).

Ausgestaltungsgemäß kann gemäß Fig. 2 und 4 die betreffende Bürstendichtung 9 bzw. 9' auf der einen, also der Schalenseite, innerhalb örtlicher Ausnehmungen 15, 16 der Schale 5 fest verankert sein.

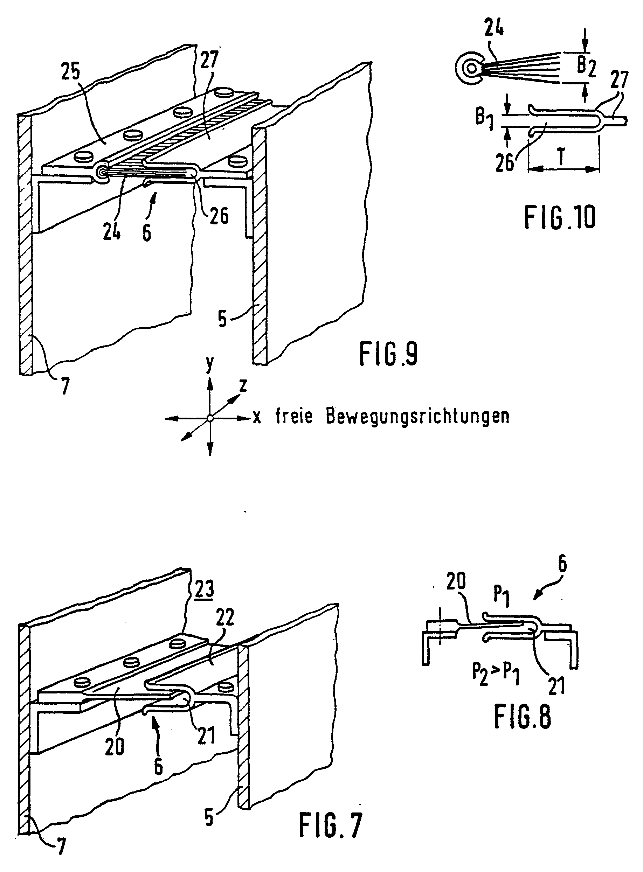

Ferner kann mindestens eine in Fig. 1 lediglich schematisch gezeigte flexible Heißgasabsperrdichtung 6 zwischen der Schale 5 und der Berandungsleitwand 7 des Gehäuses als bewegungskompensatorische Differenzdruckdichtung ausgebildet sein (Fig. 7 und 8). Hierfür kann ein dünner Blechstreifen 20 oder eine Folie an der Berandungsleitwand 7 befestigt sein, der bzw. die mit Axial- und Radialspiel in eine Fuge 21 eines mit der Schale 5 verbundenen gabelförmigen Dichtungsaufnahmeträgers 22 eingreift und sich dort im Wege des herrschenden Differenzdruckes an einer, hier also z. B. oberen der beiden inneren Fugenflanken, dichtend anschmiegt.

Für die Wirksamkeit dieser Heißgasabsperrdichtung 6 kann der Differenzdruck $\Delta P$ zwischen dem auf der einen Seite der Dichtung herrschenden heißgasdruck $P_2$ (Fig. 8) und dem auf der anderen Seite der Dichtung im Zwischenraum 23, zwischen Schale 5 und Berandungsleitwand 7, herrschenden Druck $P_1$, also $P_2 > P_1$, beigezogen werden.

Ferner kann die in Fig. 1 schon kurz behandelte flexible Heißgasabsperrdichtung 6 zwischen der Schale 5 und der Berandungsleitwand 7 des Gehäuses als bewegungskompensatorische Bürstendichtung ausgebildet sein (Fig. 9 und 10). Die Borsten 24 oder Fäden dieser Bürstendichtung sind auf der einen Seite an einem z. B. mit der Berandungsleitwand 7 verbundenen Tragelement 25 gehalten und gefaßt und ragen auf der anderen Seite, mit ihrem freien ungefaßten Ende, in die Fuge 26 eines z. B. mit der Schale verbundenen, gabelförmigen Gegenstückes 27. Es handelt sich hierbei also um eine in allen drei Bewegungsrichtungen x, y, z wirksame Dichtung.

Wie anhand der Fig. 10 veranschaulicht, soll bei der in Fig. 9 angegenbene Heißgasabsperrichtung 6 die Fuge 26 eine die erforderlichen Differenzbewegungen zulassende Tiefe T sowie eine Breite $B_1$ aufweisen, die von kleinerem Ausmaß als die Breite $B_2$ der sich aufspreizenden Borsten 24 ist.

Sämtliche Bürstendichtungen 9, 9' (Fig. 1 bis 5) bzw. 24 (Fig. 10) können aus hoch-warm-festen metallischen Fäden oder aus Glasfäden gefertigt sein.

Die besonders aus Fig. 1 und 6 entnehmbare Schale 5 kann Bestandteil die Matrix 14 auch seitlich umgebender Wandverkleidungen sein, die mit einem oder zwei voneinander getrennten, als Sammelrohre ausgebildeten Druckluftführungen 2, 4 für die betreffende Druckluft hin- und rückführung verbunden sind.

Unter Verwendung gleicher Bezugszeichen für gegenüber Fig. 1 im wesentlichen gleiche Funktionen und Bauteile veranschaulicht Fig. 6 den Einsatz der in Fig. 9 und 10 beschriebenen Heißgasabsperrdichtungen 6 als Bürstendichtungen, um den Zwischenraum 23 zwischen der Schale 5 und der Berandungsleitwand 7 des Gehäuses stromaufwärts und stromabwärts gegenüber der Heißgasströmung G abzusperren und zugleich die schon erwähnte, seitliche Matrixrandströmung H, 14 zu erzwingen in weiterer Kombination mit den übrigen Bürstendichtungen, z. B. 9, gemäß Fig. 2 und 3.

Abweichend von Fig. 1 ist beim Ausführungsbeispiel nach Fig. 6 ferner die Berandungsleitwand 7 einschließlich zugehöriger Gehäusepartien auf der Innenseite mit einer thermischen Isolierung 28 ausgestattet, wobei die betreffenden Tragelemente 25 für die Borsten 24 an einem von der Isolierung 28 gesonderten Metall-Filz-Isolierkörper 29 angelötet sind. Auf die jeweilige Innenseite der Isolierkörper 29 ist eine Platte 30' gelötet, die ihrerseits mit dem Gehäuse fest verbunden ist.

Auf diese Weise wird eine thermisch und mechanisch einwandfreie Befestigung der Tragelemente 25 am Gehäuse geschaffen.

Abweichend von Fig. 1 verdeutlicht ferner Fig. 6 die Möglichkeit, die betreffende Matrix 14 jeweils beidseitig von den als Sammelrohre ausgebildeten Druckluftführungen 2, 4 auskragen zu lassen, so daß der beschriebene Erfindungsgegenstand selbstverständlich für die betreffende rechte Matrixseite ebenfalls relevant ist.

Im übrigen können die beiden Heißgasabsperrdichtungen 6 (Fig. 6), die als Bürstendichtungen nach Fig. 9 und 10 ausgebildet sind, durch ein jeweiliges Differenzdruckdichtungskonzept gemäß Fig. 7 und 8 ersetzt werden.

## Patentansprüche

1. Wärmetauscher mit einer heißgasumströmten, im wesentlichen aus U-förmigen Rohrbügeln bestehenden Kreuz-Gegenstrom-Matrix (14), die einerseits mit zwei voneinander getrennten Druckluftführungen (2, 4) kommuniziert und andererseits einen bogenförmigen Umlenkbereich (3) aufweist, der außen von einer Berandungsleitwand (7) eines Heißgasgehäuses mit Abstand umgeben ist und mit einer zwischen Matrix (14) und Berandungsleitwand (7) angeordneten, den Umlenkbereich (3) außen heißgasseitig zumindest teilweise abdeckenden Schale (5), die über mindestens eine flexible Heißgasabsperrdichtung (6) mit der Berandungsleitwand (7) verbunden ist, gekennzeichnet durch folgende Merkmale:

a) Mittels Bürstendichtungen (9) ist ein zwischen der Schale (5) und benachbarten Rohrbügeln (30) des Umlenkbereichs (3) angeordneter Zwischenraum (8) abgesperrt und in rohrbogenseitig offene Abschnitte (17, 18, 19) aufgeteilt;

b) die Bürstendichtungen (9) sind auf der einen Seite an der Schale (5) befestigt und auf der anderen Seite lose und bewegungskompensatorisch gegen die Rohrbügel (30) geführt.

2. Wärmetauscher nach Anspruch 1, dadurch gekennzeichnet, daß die freien Enden der Bürstendichtungen (9) - in die in Nachbarschaft der Schale (5) zwischen den Profilenden der Rohrbügel (30) belassenen Zwischenräume eingreifen.

3. Wärmetauscher nach Anspruch 1 oder 2, dadurch gekennzeichnet, daß die Bürstendichtungen (9) schräg oder (9') senkrecht zur jeweiligen Profilrohrachse (3') der randständigen Rohrbügel (30) angestellt sind.

4. Wärmetauscher nach den Ansprüchen 1 bis 3, dadurch gekennzeichnet, daß die Bürstendichtungen (9, 9') auf der einen Seite innerhalb schalenseitiger Ausnehmungen (15, 16) verankert sind.

5. Wärmetauscher nach einem oder mehreren der Ansprüche 1 bis 4, dadurch gekennzeichnet, daß die flexible Heißgasabsperrdichtung (6) zwischen der Schale (5) und der Berandungsleitwand (7) des Gehäuses als bewegungskompensatorische Differenzdruckdichtung ausgebildet ist.

6. Wärmetauscher nach Anspruch 5, dadurch gekennzeichnet, daß die Heißgasabsperrdichtung (6) aus einem dünnen Blechstreifen (20) oder einer Folie besteht, der bzw. die mit Axial- und Radialspiel in eine mit der Schale (5) verbundene Fuge (21) eingreift und sich dort an eine der beiden inneren Fugenflanken dichtend anschmiegt.

7. Wärmetauscher nach einem oder mehreren der Ansprüche 1 bis 4, dadurch gekennzeichnet, daß die flexible Heißgasabsperrdichtung (6) zwischen der Schale (5) und der Berandungsleitwand (7) des Gehäuses als bewegungskompensatorische Bürstendichtung ausgebildet ist.

8. Wärmetauscher nach Anspruch 7, dadurch gekennzeichnet, daß die Borsten oder Fäden (24) der Bürstendichtung auf der einen Seite an einem, z. B. mit der Berandungsleitwand (7) verbundenen, Tragelement (25) gehalten und gefaßt sind und auf der anderen Seite mit ihrem freien ungefaßten Ende in die Fuge (26) eines, z. B. mit der Schale (5) verbundenen, Gegenstückes (27) ragen, wobei die Fuge (26) eine Differenzbewegungen zulassende Tiefe (T) sowie eine Breite ($B_1$) aufweist, die von kleinerem Ausmaß als die Breite ($B_2$) der sich

aufspreizenden Borsten oder Fäden ist.

9. Wärmetauscher nach einem oder mehreren der Ansprüche 1 bis 8, dadurch gekennzeichnet, daß sämtliche Bürstendichtungen aus hochwarmfesten metallischen Fäden oder aus Glasfäden gefertigt sind.

10. Wärmetauscher nach einem oder mehreren der Ansprüche 1 bis 9, dadurch gekennzeichnet, daß die Schale (5) Bestandteil von die Matrix (14) auch seitlich umgebender Wandverkleidungen ist, die mit einem oder zwei voneinander getrennten, als Sammelrohre ausgebildeten Druckluftführungen (2, 4) zur Druckluftthin- und -rückführung verbunden sind.

## Claims

Heat exchanger with a cross-contraflow matrix (14) consisting essentially of U-shaped tube sections, which communicates on one side with two compressed air pipes (2, 4) separated from each other and which on the other side is provided with a curved return area (3) which is surrounded with a clearance on the outside by a boundary deflecting wall (7) of a heating gas housing and with a shell (5) arranged between the matrix (14) and the boundary deflecting wall (7) and which covers at least in part the return area (3) on the outside on the heating gas side, whereby this shell is connected to the boundary deflecting wall (7) via at least a flexible heating gas shut-off seal, characterised by the following features:

a) an intermediate space (8) arranged between the shell (5) and the adjacent tube sections (30) of the return area (3) is closed by means of brush seals (9) and is divided into sections (17, 18, 19) which are open on the side of the tube curve;

b) the brush seals (9) are secured on one side to the shell (5) and are run on the other side against the tube sections (3) so that they are loose and compensate for movement.

2. Heat exchanger according to claim 1, characterised in that the free ends of the brush seals (9) engage in the intermediate spaces left between the profile ends of the tube sections (30) in the vicinity of the shell (5).

3. Heat exchanger according to claim 1 or 2, characterised in that the brush seals (9) are placed so that they are oblique or (9') perpendicular to the corresponding profile tube axis (3') of the constant edge tube sections (30).

4. Heat exchanger according to claims 1 to 3, characterised in that the brush seals (9, 9') are anchored on one side inside recesses (15, 16) on the shell side.

5. Heat exchanger according to one or several of claims 1 to 4 characterised in that the flexible heating gas shut-off seal (6) is constructed between the shell (5) and the boundary deflecting wall (7) of the housing as a differential pressure seal with movement compensation.

6. Heat exchanger according to claim 5 characterised in that the heating gas shut-off seal (6) consists of a thin sheet-metal strip (20) or a foil which engages with axial and radial play in a joint (21) connected to the shell (5) and which there nestles against one of the two inner seal flanks so that it provides sealing.

7. Heat exchanger according to one or several of claims 1 to 4, characterised in that the flexible heating gas shut-off seal (6) between the shell (5) and the boundary deflecting wall (7) of the housing is constructed as a brush seal with movement compensation.

8. Heat exchanger according to claim 7 characterised in that, the bristles or threads (24) of the brush seal are held and gripped on one side to a supporting component (25) which is connected for example to the boundary deflecting wall (7) and extend on the other side with their free non-gripped end into the joint (26) of a matching part which is connected for example to the shell (5), whereby the joint (26) has a depth (D) which permits differential movements and a width (B$_1$) which is of smaller size than the width (B$_2$) of the spreading brushes or threads.

9. Heat exchanger according to one or several of claims 1 to 8, characterised in that all the brush seals are made of highly heat resistant metal threads or of glass threads.

10. Heat exchanger according to one or several of the claims 1 to 9 characterised in that, the shell (5) forms part of the wall coverings which also surround the matrix (14) at the side, whereby these coverings are connected to one or two compressed air pipes (2, 4) for conveying the compressed air forwards and backwards which are constructed as collector pipes and which are separated from each other.

## Revendications

1. Echangeur de chaleur comportant une matrice à contre-courant croisé (14) formée principalement de coudes de tubes en forme de U balayés par un gaz chaud, matrice qui est reliée, d'une part, à deux conduites d'air comprimé (2, 4) distincte l'une de l'autre, et, comprend, d'autre part, une zone de renvoi en arc de cercle (3) qui est entourée extérieurement et à une certaine distance par une paroi directrice (7) d'un carter à gaz chaud et une coquille (5) qui recouvre la zone de renvoi (3) au moins partiellement, à l'extérieur, du côté des gaz chauds, cette coquille étant reliée par au moins une barrière souple (6) d'arrêt des gaz chauds à la paroi directrice (7), échangeur de chaleur caractérisé en ce que:

a) l'intervalle (8) entre la coquille (5) et les coudes tubulaires (40) adjacents de la zone de renvoi (3) est fermé par des joints d'étanchéité à balai (9) et subdivisé en des segments (17, 18, 19) ouverts du côté du coude du tube;

b) les joints d'étanchéité à balai (9) sont fixés d'un côté à la coquille (5) et de l'autre côté ils sont guidés librement et de manière à compenser le mouvement par rapport aux coudes tubulaires (30).

2. Echangeur de chaleur selon la revendication 1, caractérisé en ce que l'extrémité libre des joints d'étanchéité en forme de balai (9) vient dans les intervalles subsistant au niveau des coquilles (5) entre les extrémités profilées des coudes tubulaires (30).

3. Echangeur de chaleur selon la revendication 1 ou 2, caractérisé en ce que les joints à balai (9) sont appliqués de manière inclinée ou (9') perpendiculairement à l'axe respectif (3') des coudes de tubes (30) situés du côté du bord.

4. Echangeur de chaleur selon l'une quelconque des revendications 1 à 3, caractérisé en ce que les joints d'étanchéité en forme de balais (9, 9') sont accrochés par une extrémité dans des cavités (15, 16) en forme de coquilles.

5. Echangeur de chaleur selon l'une quelconque des revendications 1 à 4, caractérisé en ce que la barrière souple (6) d'arrêt de gaz chaud entre la coquille (5) et la paroi directrice (7) du carter est réalisée en forme de joint à pression différencielle à compensation de mouvement.

6. Echangeur de chaleur selon la revendication 5, caractérisé en ce que la barrière d'arrêt de gaz chaud (6) se compose d'une mince bande de tôle (20) ou d'une feuille pénétrant avec du jeu axial et radial dans un intervalle (21) solidaire de la coquille (5) pour s'appliquer de manière étanche contre l'une des faces intérieures de cet intervalle.

7. Echangeur de chaleur selon l'une quelconque des revendications 1 à 4, caractérisé en ce que la barrière souple (6) au gaz chaud entre la coquille (5) et la paroi directrice (7) du carter est réalisée sous la forme d'un joint à balai à compensation de mouvement.

8. Echangeur de chaleur selon la revendication 7, caractérisé en ce que les balais ou fils (24) des joints d'étanchéité en forme de balai sont maintenus d'un côté par un élément de support (25) relié par exemple à la paroi directrice (7) et y sont fixés, alors que de l'autre côté ils pénètrent par leur extrémité libre dans l'intervalle (26) d'une pièce opposée (27) par exemple solidaire de la coquille (5), l'intervalle (26) ayant une profondeur (T) permettant un mouvement différentiel ainsi qu'une largeur (B1) plus faible que la largeur (B2) des balais ou fils qui s'écartent.

9. Echangeur de chaleur selon l'une quelconque des revendications 1 à 8, caractérisé en ce que tous les joints d'étanchéité sont constitués par des fils métalliques très réfractaires ou par des fils de verre.

10. Echangeur de chaleur selon l'une quelconque des revendications 1 à 9, caractérisé en ce que la coquille (5) fait partie de la matrice (14) même avec les enveloppes latérales qui sont reliées à une ou deux conduites d'air comprimé, distinctes (2, 4) en forme de collecteurs pour l'alimentation et l'évacuation de l'air comprimé.

FIG.1

FIG.2

FIG.3

FIG.4

FIG.5

FIG.6

0 199 320

FIG.9

FIG.10

x freie Bewegungsrichtungen

FIG.7

FIG.8